Europäisches Patentamt

European Patent Office

Office européen des brevets

(11) Numéro de publication: **0 242 297
B1**

(12) # FASCICULE DE BREVET EUROPEEN

(45) Date de publication du fascicule du brevet:
**13.09.89**

(51) Int. Cl.⁴: **B60C 23/04**

(21) Numéro de dépôt: **87400856.8**

(22) Date de dépôt: **15.04.87**

(54) **Ensemble support d'organe actif sur une jante de roue de véhicule automobile, joint et support d'organe actif pour cet ensemble.**

(30) Priorité: **17.04.86 FR 8605569**

(43) Date de publication de la demande:
**21.10.87 Bulletin 87/43**

(45) Mention de la délivrance du brevet:
**13.09.89 Bulletin 89/37**

(84) Etats contractants désignés:
**DE ES GB IT**

(56) Documents cités:
**EP-A- 0 059 795
DE-C- 3 310 052
FR-A- 1 410 101
FR-A- 2 241 420
FR-A- 2 404 375
FR-A- 2 492 741**

(73) Titulaire: **JAEGER, 2, rue Baudin,
F-92303 Levallois-Perret(FR)**

(72) Inventeur: **Chantome, Isabelle, 18, rue de Lisbonne,
F-75008 Paris(FR)**
Inventeur: **Regnault, Serge, 22, rue Milton,
F-75009 Paris(FR)**

(74) Mandataire: **Martin, Jean-Jacques et al, Cabinet
REGIMBEAU 26, Avenue Kléber, F-75116 Paris(FR)**

ACTORUM AG

## Description

La présente invention concerne le domaine des véhicules automobiles.

La présente invention concerne plus précisément un ensemble support d'organe actif sur une jante de roue de véhicule automobile avec traversée étanche de la jante en vue d'une communication avec l'intérieur du pneumatique.

La présente invention s'applique en particulier, mais non exclusivement, aux dispositifs de détection de dégonflement des pneumatiques d'un véhicule automobile comprenant, de préférence, intégrés à l'organe actif, un mano-contact sensible à la pression interne du pneumatique et une bobine associée à ce dernier pour transmettre à une bobine fixe portée par la carrosserie du véhicule une information liée à la pression interne du pneumatique.

On a déjà proposé de nombreux dispositifs permettant de supporter de tels organes actifs sensibles à la pression interne du pneumatique (et comprenant comme indiqué précédemment un mano-contact et une bobine) sur la jante d'une roue de véhicule automobile.

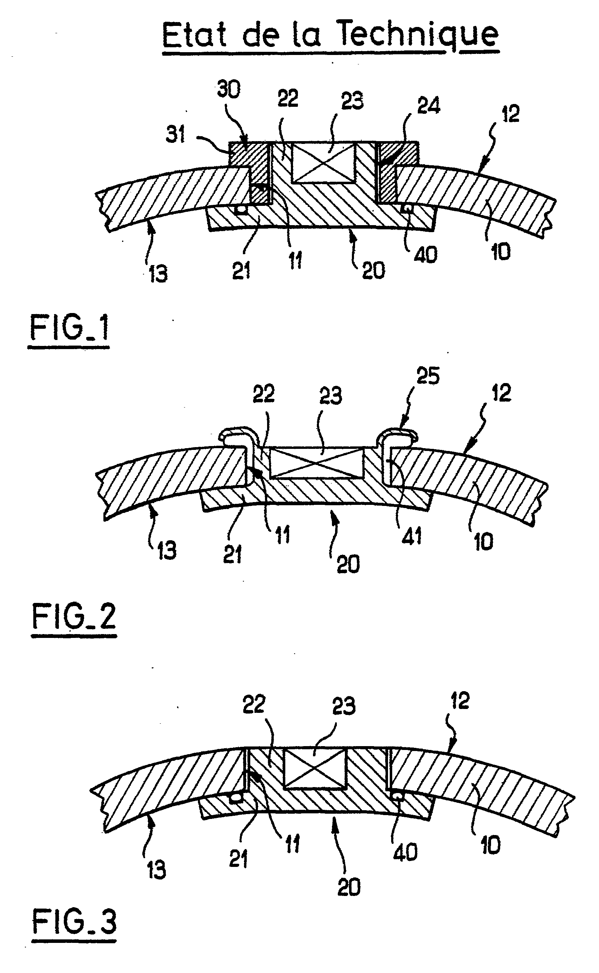

De tels dispositifs jusqu'ici proposés sont illustrés à titre d'exemples sur les figures 1, 2 et 3 annexées.

Sur ces figures 1, 2 et 3 la jante est référencée 10. Celle-ci possède un alésage cylindrique traversant 11. La face convexe de la jante dirigée vers l'intérieur du pneumatique est référencée 12, l'autre face de la jante portant la référence 13.

Selon les trois modes de réalisation illustrés sur les figures 1, 2 et 3 respectivement, le support de l'organe actif qui porte la référence générale 20 présente une tête évasée 21 qui repose contre la surface 13 de la jante et contient la bobine électrique, et un manchon 22 destiné à être engagé dans l'alésage 11 précité de la jante et qui porte le mano-contact 23 de telle sorte que ce dernier communique avec le volume interne du pneumatique.

Selon le mode de réalisation représenté sur la figure 1, le manchon 22 est muni d'un filetage 24 sur sa périphérie extérieure. Ce manchon 22 est immobilisé sur la jante 10 grâce à un écrou 30 dont la tête évasée 31 repose contre la surface 12 de la jante. Un joint torique d'étanchéité 40 est interposé entre la tête évasée 21 du support et la surface 13 de la jante.

Le dispositif représenté sur la figure 1, bien qu'il ait déjà rendu de grands services présente, entre autre comme inconvénient, qu'il requiert un temps de montage non négligeable et surtout qu'il impose un démontage du pneumatique avant toute intervention, pour accéder à lécrou 30.

Selon le mode de réalisation représenté sur la figure 2 le manchon 22 est immodilisé sur la jante 10 grâce un sertissage référencé schématiquement 25 de son bord libre opposé à la tête évasée 21. Un joint d'étanchéité 41 est intercalé entre le sertissage 25 et la surface 12 de la jante d'une part, et la périphérie extérieure du manchon 22 et la surface de l'alésage 11 d'autre part.

Le dispositif représenté sur la figure 2 a également rendu de grands services néanmoins il présente les mêmes inconvénients que le dispositif illustré sur la figure 1, à savoir un temps de montage non négligeable et un démontage du pneumatique nécessaire avant toute intervention.

Selon le mode de réalisation représenté sur la figure 3, la périphérie extérieure du manchon 22 est filetée et vient en prise directement dans un taraudage correspondant ménagé au niveau de l'alésage 11 de la jante.

Un joint d'étanchéité torique 40 est là encore intercalé entre la tête évasée 21 du support et la surface 13 de la jante.

Le dispositif illustré sur la figure 3 tend à réduire le temps de montage nécessaire par rapport aux dispositions illustrées sur les figures 1 et 2. Néanmoins, la surface 13 de la jante 10 contre laquelle repose en position assemblée la tête 21 du support étant de forme concave cylindrique, il s'est avéré impossible jusqu'ici de réaliser un support 20 monobloc comprenant la tête 21, logeant la bobine et le manchon 22 logeant le mano contact 23 précités qui permette un vissage dans l'alésage taraudé 11 de la jante. Pour résoudre cette difficulté selon la disposition illustrée sur la figure 3, le support 20 a ainsi été réalisé jusqu'ici en deux parties à savoir d'une part, un manchon 22 vissé dans l'alésage 11 de la jante et portant le mano-contact 23 et d'autre part, une tête évasée 21 distincte portant la bobine. Pour assembler ces éléments sur la jante 10 il convient dans un premier temps de visser le manchon 22 dans l'alésage taraudé 11 puis de clipser la tête évasée 21 sur le manchon 22.

Le temps de montage est ainsi également non négligeable. De plus, le plus souvent, les fils reliant le mano-contact 23 à la bobine logée dans la tête évasée 21 sont torsadés. Cela laisse à désirer au niveau de la fiabilité.

La présente invention a maintenant pour but de proposer un nouvel ensemble support d'organe actif sur une jante de roue de véhicule automobile avec traversée étanche de la jante en vue d'une communication avec l'intérieur du pneumatique qui soit plus simple, plus fiable et puisse être installé plus rapidement que les dispositifs jusqu'ici proposés.

Un autre but de la présente invention est de proposer un dispositif support d'organe actif permettant de ne mettre en place l'organe actif (mano contact et bobine) sur la jante du véhicule, qu'après avoir installé le pneumatique et testé celui-ci sous pression.

Un autre but de la présente invention est de proposer un nouvel ensemble support d'organe actif adapté pour éviter toute détérioration du pneumatique et/ou du mano-contact lors de l'installation du pneumatique sur la jante.

Un autre but de la présente invention est de proposer un ensemble support d'organe actif sur une jante de roue de véhicule automobile qui présente un faible encombrement de part et d'autre de l'épaisseur de la jante.

Ces différents buts sont atteints, dans le cadre de la présente invention, grâce à un ensemble support d'organe actif sur une jante de roue de véhicule automobile , avec traversée étanche de la jante,

en vue d'une communication avec l'intérieur du pneumatique, comprenant :

- d'une part, un joint annulaire destiné à être engagé dans un alésage traversant la jante, et comportant un opercule obturant initialement le passage central du joint, et

- d'autre part, un support d'organe actif muni d'un canon adapté pour séparer l'opercule du joint lorsqu'il est inséré dans le passage central de celui-ci et qui comporte des moyens adaptés pour assurer un clipsage du canon dans le passage central du joint.

De préférence, ce joint comprend un fût généralement cylindrique comportant sur sa surface extérieure et au voisinage de chacune de ses extrémités des bourrelets périphériques annulaires, destinés à reposer respectivement contre les surfaces interne et externe de la jante, autour de l'alésage ménagé dans celle-ci.

De plus, le joint comprend de préférence selon la présente invention, sur sa surface interne, une lèvre annulaire, dirigée généralement vers l'intérieur du pneumatique et destinée à reposer contre la périphérie du canon prévu sur le support d'organe actif.

Selon une caractéristique avantageuse de l'invention l'opercule est formé d'une pièce distincte du joint et maintenu initialement sur celui-ci par sa bordure engagée dans une rainure réalisée sur la périphérie interne du joint, au niveau de son passage central.

Selon l'invention l'opercule est avantageusement formé d'une calotte bombée, convexe vers l'intérieur du pneumatique.

Selon une autre caractéristique avantageuse de l'invention l'enveloppe du canon du support d'organe actif est délimitée par deux surfaces tronconiques effilées vers l'intérieur du pnematique et concentriques, reliées par un décrochement en creux, dirigé vers l'extérieur du pneumatique.

Selon la présente invention la surface interne de la lèvre précitée prévue sur le joint est de préférence sensiblement complémentaire du décrochement et de la surface tronconique du canon, la plus éloignée de l'espace interne du pneumatique.

Afin d'interdire toute possibilité de séparation fortuite du support d'organe actif et de là une mise à l'air libre du volume interne du pneumatique, selon la présente invention le support est de préférence protégé par un renfoncement en creux ménagé sur la surface extérieure de la jante, autour de l'alésage recevant le joint, et le cas échéant par un muret en saillie réalisé sur le pourtour du renfoncement.

La présente invention trouve notamment application pour le support d'organe actif comprenant des moyens sensibles à la pression interne du pneumatique, et plus précisément encore de préférence un mano-contact logé dans la tête évasée du support, sur la jante d'une roue de véhicule automobile . Néanmoins, la présente invention n'est pas limitée à cette application.

La présente invention concerne également le joint annulaire précité destiné à être engagé dans l'alésage de la jante, et le support d'organe adapté pour séparer l'opercule du joint et adapté pour être clipsé sur ce dernier.

D'autres caractéristiques, avantages et buts de la présente invention apparaîtront à la lecture de la description détaillée qui va suivre et en regard des dessins annexés donnés à titre d'exemple non limitatif sur lesquels, les figures 1, 2 et 3 qui illustrent l'état de la technique ayant déjà été décrites :

- la figure 4 représente une vue schématique en coupe axiale d'un joint équipé d'un opercule, conforme à la présente invention, installé sur une jante de véhicule automobile ,
- la figure 5 représente une vue du même joint associé à un support d'organe actif, après séparation de l'opercule à l'aide du canon du support.

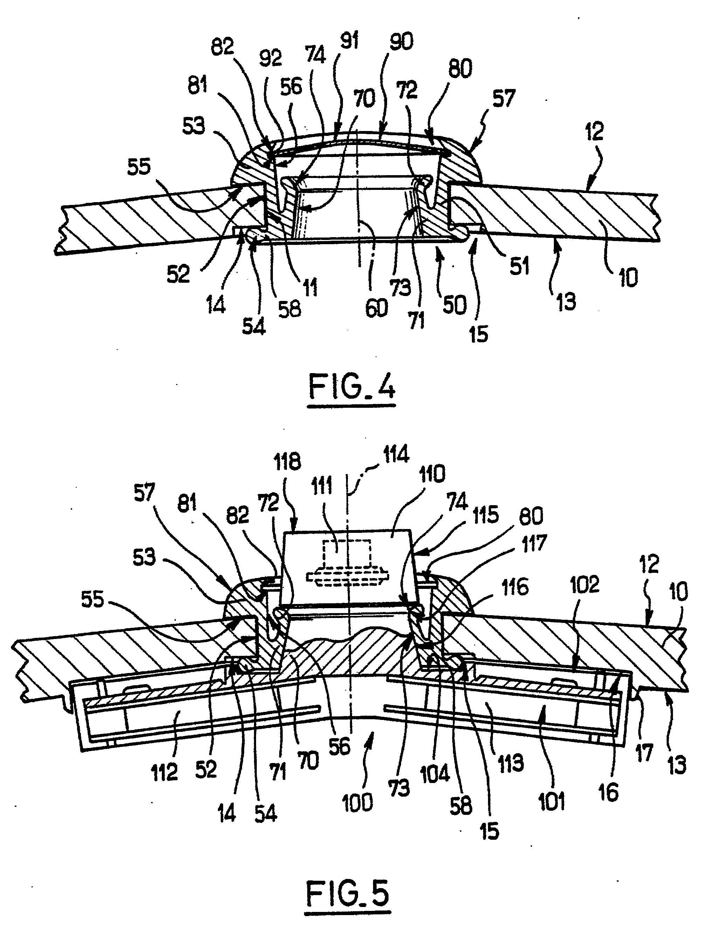

De façon similaire aux illustrations données sur les figures 1, 2 et 3 précédemment décrites, sur les figures 4 et 5 la jante du véhicule est référencée schématiquement 10. Plus précisément, on a représenté partiellement la jante 10, selon un plan de coupe transversal à son axe. La surface de la jante exposée au volume interne du pneumatique est référencée 12. La surface opposée de la jante est référencée 13. La jante 10 possède un alésage traversant de préférence cylindrique référencé 11.

On va dans un premier temps décrire la structure du joint annulaire 50 illustré sur les figures 4 et 5.

Le joint 50 comprend un fût 51 généralement cylindrique comportant sur sa surface externe 52 et au voisinage de chacune de ses extrémités des bourrelets périphériques annulaires 53, 54 destinés à reposer respectivement contre la surface interne 12 et la surface externe 13 de la jante autour de l'alésage 11 ménagé dans celui-ci.

Le bourrelet 53 placé sur la surface 12 de la jante exposée au volume interne du pneumatique possède une enveloppe générale arrondie afin d'éviter toute détérioration du pneumatique lorsque celui-ci est installé sur la jante.

Selon la représentation donnée sur les figures 4 et 5 qui constitue un mode de réalisation considéré actuellement comme préférentiel le bourrelet 53 précité possède une enveloppe correspond au quart d'un tore et plus précisément à un quartier extérieur de ce dernier.

Sur les figures 4 et 5 l'axe du joint annulaire 50 qui coïncide avec l'axe de l'alésage 11 est référencé 60. Le bourrelet 53 est délimité par une surface plane 55 transversale à l'axe 60 et destinée à reposer contre la surface 12 de la jante, une surface cylindrique interne 56 prolongeant sensiblement la surface interne du fût 51, centré sur l'axe 60, et une surface 57 généralement torique, délimitée plus précisément par la révolution d'un quart de cercle convexe vers l'extérieur autour de l'axe 60.

Le second bourrelet 54 destiné à reposer contre la surface 13 de la jante est quant à lui formé de préférence d'un élément torique relié à la surface externe 52 du fût 51 par une nervure annulaire 58 solidaire de ladite surface extérieure 52.

Par ailleurs, de préférence, le fût 51 est muni sur sa surface interne généralement cylindrique, centrée sur l'axe 60 d'une lèvre annulaire 70. La lèvre 70 est dirigée généralement vers l'intérieur du pneumatique. Cette lèvre 70 est destinée à reposer contre la périphérie extérieure du canon 110 du support d'organe actif comme cela sera explicité plus en détail par la suite.

Selon le mode de réalisation considéré actuellement comme préférentiel illustré sur les figures 4 et 5, cette lèvre 70 comprend à cet effet deux ailes 71 et 72 qui seront dites respectivement principale et secondaire par la suite.

L'aile principale 71 est reliée à la surface du fût 51 au voisinage de l'extrémité de celui-ci adjacente au bourrelet 54, c'est-à-dire adjacente à la surface 13 concave de la jante.La surface interne 73 de l'aile principale 71 est généralement tronconique et converge vers l'axe 60 en éloignement de son point de raccordement sur la surface interne du fût, c'est-à-dire en direction de l'intérieur du pneumatique.

L'aile secondaire 72 prolonge l'aile principale 71 précitée. Cette aile secondaire 72 possède une surface interne 74 tronconique qui diverge par rapport à l'axe 60 en direction de son extrémité libre, c'est-à-dire, là encore, en direction de l'intérieur du pneumatique.

L'aile principale 71 et l'aile secondaire 72 qui la prolonge sont symétriques de révolution par rapport à l'axe 60 du joint.

Enfin, on notera à l'examen des figures 4 et 5, la présence d'une rainure 80 sur la périphérie interne 56 du bourrelet 53. Cette rainure 80 est destinée à recevoir la bordure périphérique de l'opercule 90. La rainure 80 précitée est délimitée d'une part, par une surface plane 81 perpendiculaire à l'axe 60 du joint et dirigée vers l'intérieur du pneumatique, d'autre part par une surface tronconique 82 convergeant vers l'axe 60 en direction de l'intérieur du pneumatique.

L'opercule 90 est formé d'une calotte bombée 91 de préférence d'enveloppe sphérique, convexe vers l'intérieur du pneumatique, munie en périphérie d'une bordure coplanaire 92 en forme de couronne.

Le diamètre extérieur de la couronne 92 qui correspond au plus grand diamètre de l'opercule 90 est de préférence sensiblement égal, tout en étant légèrement supérieur, au diamètre du fond de la rainure 80 au repos.

Ainsi, l'opercule 90 obture de façon étanche le passage central du joint 50 lorsqu'il est inséré dans la rainure 80.

Bien entendu le diamètre de la surface extérieure 52 du fût cylindrique 51 correspond sensiblement, tout en étant légèrement supérieur au diamètre interne de l'alésage 11 prévu dans la jante 10. Par ailleurs, la distance séparant, parallèlement à l'axe 60, la surface plane 55 du bourrelet 53 du bourrelet 54 est de préférence sensiblement égale tout en étant légèrement supérieure à l'épaisseur de la jante 10 sur la périphérie de l'alésage 11.

On notera à l'examen de la figure 4 que de préférence cette épaisseur de la jante 10 autour de l'alésage 11 est définie par la distance séparant la surface 12 de la jante du fond 14 d'un renfoncement 15 ménagé sur la surface 13 de la jante autour de l'alésage 11 pour protéger le bourrelet d'étanchéité 54.

De préférence, le joint annulaire 50 est réalisé en un caoutchouc souple, tandis que l'opercule 90 est réalisé en une matière plastique semi-rigide.

On va maintenant décrire la structure du support d'organe actif 100 représenté sur la figure 5, destiné à coopérer avec le joint annulaire 50 précité.

Pour l'essentiel, ce support 100 comprend une tête évasée 101 portant sensiblement en partie médiane un canon 110, qui comme indiqué précédemment est adapté pour séparer l'opercule 90 du joint 50 lorsqu'il est inséré dans le passage central de celui-ci et qui comporte des moyens adaptés pour assurer un clipsage du canon dans le passage central du joint.

De préférence, l'organe actif porté par le support 100 comprend en combinaison un mano-contact schématiquement référencé 111 et une paire de bobines schématiquement référencé 112 et 113. Le mano-contact 111 est logé dans le canon 110 tandis que la paire de bobines 112, 113 est placée dans la tête évasée 101.

Le mano-contact 111 et la paire de bobines 112, 113 destinés à être portés par la jante 10 peuvent être similaires aux moyens de ce type référencé 100, B3 et B4 sur les dessins de la demande de brevet français déposée par la demanderesse le 14 mai 1984 sous le N. 84 07413.

La structure de ce mano-contact 111 et de la paire de bobines 112, 113 ne sera pas décrite plus en détail par la suite.

Sur la figure 5 l'axe du canon 110 est référencé 114.

Ainsi, l'organe actif comprend de préférence un mano-contact, c'est-à-dire un interrupteur électrique sensible à la pression et une paire de bobines électriques. Selon un premier mode de réalisation (conforme à la figure 6 de la demande de brevet français 84 07413 précitée) les bobines sont connectées en série et le mano-contact est connecté en parallèle de chacune de celles-ci.

Selon un second mode de réalisation (figure 7 de la demande de brevet français N. 84 07413) les bobines sont connectées en série par l'intermédiaire du mano-contact.

Sur la figure 5, l'axe du canon 110 est référencé 114. On a schématiquement représenté le mano-contact 111 dans le canon 110 et une paire de bobines 112, 113 disposée dans la tête évasée 101 respectivement de part et d'autre de l'axe 114.

De préférence, la surface 102 de la tête évasée 101 dirigée vers la jante est complémentaire de cette surface 13 pour reposer étroitement contre celle-ci.

Selon le mode de réalisation considéré actuellement comme préférentiel représenté sur la figure 5, l'enveloppe du canon 110 est délimitée par deux surfaces tronconiques 115, 116 sensiblement de même conicité effilée vers l'intérieur du pneumatique, c'est-à-dire en éloignement de la tête évasée 101, concentriques autour de l'axe 114 et reliées par un décrochement 117 en creux dirigé vers la tête évasée 101.

Par ailleurs, de préférence, la surface interne de la lèvre 70 est sensiblement complémentaire du décrochement 117 et de la surface tronconique 116 du canon 110 la plus éloignée de l'espace interne du pneumatique. C'est-à-dire que la longueur axiale de l'aile principale 71 est sensiblement égale à la longueur axiale de la surface tronconique 116 tandis que la longueur axiale de l'aile secondaire 72 est sensiblement égale à la hauteur du décrochement 117 ; de plus, l'inclinaison sur l'axe 60 de la surface tronconique interne 73 de la l'aile principale 71 est sensiblement égale à l'inclinaison sur l'axe 114 de la surface tronconique 116 tandis que l'inclinaison sur l'axe 60 de la surface interne 74 de l'aile secondaire 72 est sensiblement égale à l'inclinaison sur l'axe 114 du décrochement 117.

On notera que la tête évasée 101 est munie de préférence sur la périphérie de la base du canon 110 d'un évidement annulaire 104 recevant le bourrelet 54 du joint. La profondeur de l'évidement 104 est déterminée de telle sorte que lors de l'assemblage le bourrelet 54 soit comprimé entre le fond 14 du décrochement 15 prévu sur la jante 10 et le fond de l'évidement 104 prévu dans la tête évasée 101, sans risque de détérioration de ce bourrelet.

Enfin, comme cela est représenté schématiquement sur la figure 5, de préférence le support 100 est protégé par un renfoncement en creux 16 ménagé sur la surface 13 de la jante 10 pour recevoir la tête évasée 101 et par un muret en saillie 117 réalisé sur le pourtour du renfoncement 16. Le contour de ce renfoncement 16 est avantageu sement complémentaire du contour de la tête évasée 101 et non symétrique de révolution autour de l'axe 114 afin d'assurer automatiquement un positionnement précis des bobines 112, 113 solidaires de la jante par rapport à la ou/aux bobines associée(s) disposée(s) fixe(s) en regard sur le véhicule.

Bien entendu, la mano-contact 111 doit déboucher dans la chambre interne du pneumatique au niveau de la surface 118 du canon opposée à la tête évasée 101.

De préférence, le support 100 est réalisé en surmoulant un matériau plastique sur le corps du mano-contact 111, la paire de bobines 112, 113 et des organes d'interconnexion de ces éléments, électriquement conducteurs.

Un tel surmoulage, classique en soi, ne sera pas décrit plus en détail par la suite.

Pour utiliser le joint 50 et le support d'organe actif 100 conforme à la présente invention, on procède comme suit.

Dans un premier temps, il convient de placer le joint 50 équipé de l'opercule 90 sur la jante 10.

Pour cela on peut placer initialement le joint 50 dépourvu de l'opercule dans l'alésage 11 de la jante 10, puis insérer l'opercule 90 dans la rainure 80 ou placer directement le joint 50 équipé de l'opercule 90 dans l'alésage 11 en engageant en premier le bourrelet 54 dans l'alésage 11.

Les bourrelets 53 et 54 positionnés de part et d'autre de la jante 10 autour de l'alésage 11 assurent une étanchéité parfaite entre la jante et la périphérie du joint. Par ailleurs, comme l'on a indiqué précédemment, l'opercule 90 est engagé de façon étanche dans la rainure 80 du joint.

En conclusion, le joint 50 en combinaison avec l'opercule 90 obture de façon étanche l'alésage 11.

La jante 10 ainsi équipée est prête à recevoir un pneumatique.

Une fois le pneumatique monté sur la jante celui-ci est "collé" par pression, de façon classique en soi sur la jante.

On remarquera que, au cours de l'opération de montage du pneumatique sur la jante, compte-tenu de la forme arrondie du bourrelet 53, il n'existe aucun risque de détérioration de la jante. De même, le mano-contact n'étant pas placé sur la jante lors du montage du pneumatique il n'existe aucun risque de détérioration du mano-contact.

Par la suite, le support d'organe actif 100 portant le mano-contact 111 et la paire de bobines 112, 113 est placé sur la jante 10. Pour cela, le canon 110 est introduit dans le passage interne du joint 50, dans un premier temps la lèvre 70 repose contre la première surface tronconique 115 du canon 110 pour assurer une étanchéité primaire entre le joint 50 et le canon 110, ceci avant que la face d'extrémité 118 du canon n'arrive en contact avec l'opercule 90. Par la suite, le canon d'injection 110 éjecte l'opercule 90 dans le pneumatique.

On remarquera dans la mesure où l'opercule 90 est bombé et convexe vers l'intérieur du pneumatique d'une part, et qu'il repose contre une surface plane 81 transversale à l'axe 60, d'autre part, tout risque d'éjection de l'opercule 90 lors de la montée en pression à l'intérieur du pneumatique est évité. Par contre, lorsque le canon 110 vient en contact contre l'opercule 90 l'éjection de celui-ci à l'intérieur du pneumatique est facilitée par le fait que l'opercule peut, d'une part, subir une légère déformation élastique, d'autre part, l'opercule glisse contre la surface tronconique 82 de la rainure 80.

Le canon 110 est ainsi poussé dans l'alésage 11 jusqu'à ce que l'aile secondaire 72 de la lèvre 70 repose contre le décrochement 117. La pression interne du pneumatique vient alors faire pression sur la surface extérieure de la lèvre 70 pour solliciter celle-ci étroitement contre la surface tronconique 116 et le décrochement 117. Cette disposition, dès lors que la pression interne du pneumatique est supérieure à la pression atmosphérique, assure un accrochage positif du support d'organe actif 100.

On notera par ailleurs que toute sollicitation excessive, vers l'extérieur, du support d'organe actif 100, c'est-à-dire vers l'intérieur du pneumatique, sous l'effet de la force centrifuge lors de la rotation de la roue est limitée par le contact sur une zone importante de la tête évasée 101 contre la surface 13 de la jante.

Pour permettre l'insertion du canon 110 dans le passage du joint 50 tout en évitant de détériorer la lèvre interne 70 il est nécessaire que le diamètre de la surface cylindrique interne du fût 51 soit au moins légèrement supérieur à la somme du plus grand diamètre de la surface tronconique 115 (c'est-à-dire au niveau de la transition entre cette surface tronconique 115 et le décrochement 117) et de deux fois l'épaisseur de la lèvre 70 considérée dans une direction radiale par rapport à l'axe 60.

On a vu précédemment que l'invention permet de placer le pneumatique sur la jante avant de positionner le mano-contact 111. Cela permet en particulier d'éviter çon certaine toute détérioration du pneumatique et toute détérioration du mano-contact.

Par ailleurs, l'invention permet une intervention simple et rapide sur l'organe actif sans démonter le pneumatique.

En effet, il suffit pour cela de réduire la pression interne du pneumatique pour réduire la sollicitation exercée par la lèvre 70 sur le périphérie du canon 110 puis d'appliquer un effort limité sur la tête évasée 101 pour retirer le support d'organe actif 100.

Bien entendu la présente invention n'est pas limitée au mode de réalisation particulier qui vient d'être décrit mais s'étend à toute variante conforme à son esprit.

En particulier, on notera que la présente invention peut être utilisée pour supporter des organes actifs différents d'un mano-contact et de bobines sur la jante 10 d'un véhicule. Il peut s'agir par exemple d'un émetteur générant un signal représentatif de la pression du pneumatique.

## Revendications

1. Ensemble support d'organe actif sur une jante de roue de véhicule automobile avec traversée étanche de la jante en vue d'une communication avec l'intérieur du pneumatique, caractérisé par le fait qu'il comprend:

- d'une part, un joint annulaire (50) destiné à être engagé dans un alésage (11) traversant la jante, et comportant un opercule (90) obturant initialement le passage central du joint, et

- d'autre part, un support d'organe actif (100) muni d'un canon (110) adapté pour séparer l'opercule (90) du joint (50) lorsqu'il est inséré dans le passage central de celui-ci et qui comporte des moyens (117) adaptés pour assurer un clipsage du canon (110) dans le passage central du joint.

2. Ensemble support selon la revendication 1, caractérisé par le fait que le joint (50) comprend un fût (51) généralement cylindrique comportant sur sa surface extérieure et au voisinage de chacune de ses extrémités des bourrelets (53, 54) périphériques annulaires destinés à reposer respectivement contre les surfaces interne (12) et externe (13) de la jante, autour de l'alésage (11) ménagé dans celui-ci.

3. Ensemble support selon l'une des revendications 1 ou 2, caractérisé par le fait que le joint (50) comporte de plus sur sa surface interne une lèvre (70) annulaire, dirigée généralement vers l'intérieur du pneumatique et destinée à reposer contre la périphérie du canon (110) prévu sur le support d'organe d'actif (100).

4. Ensemble support selon l'une des revendications 1 à 3, caractérisé par le fait que l'opercule (90) est formé d'une pièce distinct du joint (50) et maintenu initialement sur celui-ci par sa bordure engagée dans une rainure (80) réalisée sur la périphérie interne du joint (50) au niveau de son passage central.

5. Ensemble support selon l'une des revendications 1 à 4, caractérisé par le fait que l'opercule (90) est formé d'une calotte bombée, convexe vers l'intérieur du pneumatique.

6. Ensemble support selon l'une des revendications 1 à 5, caractérisé par le fait que l'enveloppe du canon (110) du support d'organe actif (100) est délimitée par deux surfaces tronconiques (115, 116) effilées vers l'intérieur du pneumatique et concentriques, reliées par un décrochement en creux (117) dirigé vers l'extérieur du pneumatique.

7. Ensemble support selon les revendications 6 et 3 prises en combinaison, caractérisé par le fait que la surface interne (73, 74) de la lèvre (70) est sensiblement complémentaire du décrochement (117) et de la surface tronconique (116) du canon la plus éloignée de l'espace interne du pneumatique.

8. Ensemble support selon l'une des revendications 1 à 7, caractérisé par le fait que le support (100) est protégé par un renfoncement en creux (16) ménagé sur la surface extérieure (13) de la jante, autour de l'alésage (11) recevant le joint, et le cas échéant, par un muret (17) en saillie réalisé sur le pourtour du renfoncement.

9. Ensemble support selon l'une des revendications 1 à 8, caractérisé par le fait que l'organe actif comprend des moyens (111) sensibles à la pression interne du pneumatique.

10. Ensemble support selon l'une des revendications 1 à 9, caractérisé par le fait que l'organe actif comprend un mano-contact (111) logé dans le canon (110) et au moins une bobine (112, 113) logée dans une partie évasée (101) du support reposant contre la surface externe (13) de la jante.

11. Joint annulaire conforme à l'une des revendications 1 à 10 destiné à être engagé dans un alésage traversant une jante de véhicule et apte à recevoir un opercule (90) obturant initialement son passage central.

12. Support d'organe actif conforme à l'une des revendications 1 à 10 muni d'un canon (110) adapté pour séparer un opercule d'un joint placé sur une jante de véhicule automobile lorsqu'il est inséré dans le passage central du joint et comportant des moyens (117) adaptés pour assurer un clipsage du canon dans le passage central du joint.

## Patentansprüche

1. Trägeranordnung für ein aktives Organ an einer Kraftfahrzeugradfelge mit dichter Durchführung durch die Felge für eine Verbindung mit dem Reifeninneren, gekennzeichnet durch

– eine Ringdichtung (50), die in eine Durchgangsöffnung (11) in der Felge eingesetzt ist und eine Kappe (90) umfaßt, die anfänglich die zentrale Durchgangsöffnung der Ringdichtung verschließt, und

– einen Träger (100) für ein aktives Organ mit einer Hülse (110), welche die Kappe (90) von der Ringdichtung (50) trennen kann, wenn sie in deren zentrale Durchgangsöffnung eingeführt wird, und welche Mittel (117) umfaßt, die eine Klemmhalterung der Hülse (110) in der zentralen Durchgangsöffnung der Ringdichtung sicherstellen.

2. Anordnung nach Anspruch 1, dadurch gekennzeichnet, daß die Ringdichtung (50) ein im wesentlichen zylindrisches Gehäuse (51) umfaßt, das auf seiner Außenfläche und jeweils in der Nachbarschaft seiner Extremitäten periphere ringförmige Wülste (53, 54) umfaßt, die dazu bestimmt sind, an der Innen- (12) und der Außenfläche (13) der Felge die Durchgangsöffnung überwölbend anzuliegen.

3. Anordnung nach Anspruch 1 oder 2, dadurch gekennzeichnet, daß die Ringdichtung (50) auf ihrer Innenfläche eine ringförmige Lippe (70) aufweist, welche im wesentlichen gegen das Reifeninnere gerichtet ist und an der Peripherie der Hülse (110) auf dem aktiven Organträger (100) anliegt.

4. Anordnung nach einem der Ansprüche 1 bis 3, dadurch gekennzeichnet, daß die Kappe (90) aus einem Stück geformt ist, das von der Ringdichtung (50) getrennt ist, und zunächst mit seinem Rand an der Ringdichtung in einer Nut (80) gehalten ist, welche am inneren Umfang der Ringdichtung (50) in der Höhe ihrer zentralen Durchgangsöffnung ausgebildet ist.

5. Anordnung nach einem der Ansprüche 1 bis 4, dadurch gekennzeichnet, daß die Kappe (90) von einer konvex gegen das Reifeninnere gewölbten Kalotte gebildet ist,

6. Anordnung nach einem der Ansprüche 1 bis 5, dadurch gekennzeichnet, daß die Mantelfläche der Hülse (110) des Trägers (100) von zwei kegelstumpfförmigen Flächen (115, 116) begrenzt ist, welche sich konzentrisch gegen das Reifeninnere verjüngen und über eine ausgekehlte Stufe (117) verbunden sind, die zum Reifenäußeren weist.

7. Anordnung nach der Kombination der Ansprüche 6 und 3, dadurch gekennzeichnet, daß die Innenfläche (73, 74) der Lippe (70) zu der Stufe (117) und derjenigen kegelstumpfförmigen Fläche (116) der Hülse paßt, welche weiter von dem Reifeninneren entfernt ist.

8. Anordnung nach einem der Ansprüche 1 bis 7, dadurch gekennzeichnet, daß der Träger (100) durch einen Hohlraum (16) an der Außenfläche (13) der Felge, der die Durchgangsöffnung (11) für die Ringdichtung umgibt, und gegebenenfalls durch einen Vorsprung (17) auf dem Umfang des Hohlraumes geschützt ist.

9. Anordnung nach einem der Ansprüche 1 bis 8, dadurch gekennzeichnet, daß das aktive Organ Mittel (111) umfaßt, welche den Reifeninnendruck erfassen.

10. Anordnung nach einem der Ansprüche 1 bis 9, dadurch gekennzeichnet, daß das aktive Organ einen Druckkontakt (111) in der Hülse (110) und mindestens eine Spule (112, 113) in einem erweiterten Bereich (101) des Trägers an der Außenfläche (13) der Felge umfaßt.

11. Ringdichtung nach einem der Ansprüche 1 bis 10 zum Einbringen in eine Durchgangsöffnung in einer Fahrzeugfelge und dazu geeignet, eine Kappe (90) aufzunehmen, welche anfänglich die zentrale Durchgangsöffnung der Ringdichtung verschließt.

12. Anordnung nach einem der Ansprüche 1 bis 10 mit einer Hülse (110), welche eine Kappe von einer in einer Felge eines Kraftfahrzeuges untergebrachten Dichtung trennen kann, wenn die Hülse in die Durchgangsöffnung der Dichtung eingebracht wird, wobei sie Mittel (117) zum Sicherstellen einer Klemmhalterung der Hülse innerhalb der zentralen Durchgangsöffnung der Felge umfaßt.

## Claims

1. A support assembly for an active device on the rim of a motor vehicle wheel with watertight communication through the rim providing communication with the interior of the tyre, characterised in that it includes:
   - on the one hand, an annular seal (50) designed to engage a hole (11) passing through the rim and incorporating a cap (90) which initially obstructs the central passage through the seal and
   - on the other hand, a support for the active device (100) provided with a barrel (110) designed to open the cap (90) in the seal (50) when it is inserted into the central passage thereof, and which incorporates means (117) for clipping the barrel (110) in the central passage through the seal.

2. A support assembly according to claim 1, characterised in that the seal (50) comprises a generally cylindrical drum (51) bearing peripheral annular beads (53, 54) on its external surface in the vicinity of each of its extremities designed to rest against the inner (12) and outer (13) surfaces of the rim respectively, around the hole (11) formed therein.

3. A support assembly according to one of claims 1 or 2, characterised in that the seal (50) also bears an annular lip (70) on its internal surface which is generally directed towards the interior of the tyre and is designed to rest against the periphery of the barrel (110) provided on the support for the active device (100).

4. A support assembly according to one of claims 1 to 3, characterised in that the cap (90) is constructed of a piece which is separate from the seal (50) and initially held thereupon by its edge which engages a groove (80) made in the internal periphery of the seal (50) within its central passage.

5. A support assembly according to one of claims 1 to 4, characterised in that the cap (90) consists of a dished cap, which is convex towards the interior of the tyre.

6. A support assembly according to one of claims 1 to 5, characterised in that the envelope of the barrel (110) of the support for the active device (100) is bounded by two concentric frustoconical surfaces (115, 116) which taper towards the interior of the tyre and are connected by a hollow projection (117) directed towards the exterior of the tyre.

7. A support assembly according to claims 6 and 3 taken in combination, characterised in that the internal surface (73, 74) of the lip (70) is substantially complementary to the projection (117) and the frustoconical surface (116) of the barrel furthest from the internal space within the tyre.

8. A support assembly according to one of claims 1 to 7, characterised in that the support (100) is protected by a hollow recess (16) provided in the outer surface (13) of the rim, around the hole (11) in which the seal is fitted, and if applicable by a projecting upstand (17) provided around the perimeter of the recess.

9. A support assembly according to one of claims 1 to 8, characterised in that the active device incorporates means (111) which are sensitive to the internal pressure in the tyre.

10. A support assembly according to one of claims 1 to 9, characterised in that the active device comprises a pressure contact (111) mounted in the barrel (110) and at least one coil (112, 113) mounted in a flared-out portion (101) of the support resting against the outer surface (13) of the rim.

11. An annular seal according to claims 1 to 10 designed to be fitted in a hole passing through the rim of a vehicle's wheel capable of receiving a cap (90) which initially obstructs its central passage.

12. A support for an active device according to one of claims 1 to 10 fitted with a barrel (110) designed to separate a cap from a seal placed in the rim of a motor vehicle wheel when it is inserted into the central passage of the seal and comprising means (117) designed to clip the barrel into the central passage of the seal.

# Etat de la Technique

FIG_1

FIG_2

FIG_3

FIG.4

FIG.5